# EUROPEAN PATENT SPECIFICATION

(11) **EP 1 803 058 B1**
(45) Date of publication and mention of the grant of the patent: **16.07.2008**
(21) Application number: 05737686.5
(22) Date of filing: 22.04.2005
(51) Int. Cl.: G06F 3/14, H04M 1/725, H04M 1/737, H04N 7/15

(54) **VIDEOCONFERENCING METHOD, HANDHELD WIRELESS COMMUNICATOR, AND VIDEOCONFERENCING COMPUTER PROGRAM PRODUCT**
VIDEOKONFERENZVERFAHREN, TRAGBARES DRAHTLOSES KOMMUNIKATIONSGERÄT UND COMPUTERPROGRAMMPRODUKT FÜR VIDEOKONFERENZEN
PROCEDE DE VIDEOCONFERENCE, DISPOSITIF DE COMMUNICATION PORTATIF SANS FIL ET PRODUIT AVEC PROGRAMME INFORMATIQUE POUR VIDEOCONFERENCES

(30) Priority: 19.10.2004 US 968771; 19.10.2004 US 968770
(43) Date of publication of application: 04.07.2007
(73) Proprietor: Sony Ericsson Mobile Communications AB, 221 88 Lund (SE)
(72) Inventor: VANCE, Scott L., 245 93, Staffanstorp (SE); TRIVELY, Martin, Roswell, Georgia 30075-2149 (US); DHRIMAJ, Ardian, Morrisville, North Carolina 27560 (US); VASA, Yojak, Cary, North Carolina 27519 (US)
(74) Representative: Vigars, Christopher Ian
(86) International application number: PCT/US2005/014016
(87) International publication number: WO 2006/043977

(56) References cited:
- EP-A- 1 213 896
- EP-A- 1 271 286
- EP-A- 1 455 505
- US-A1- 2002 066 115

## Description

### Field of the Invention

This invention relates to displaying of information, and more particularly to systems, methods and computer program products for displaying content on multiple display screens.

### Background of the Invention

Handheld wireless communicators are widely used for voice, data and/or multimedia communications. As used herein, the term "handheld wireless communicator" means a wireless communicator that is small enough to be cradled in an average size human hand during operation. Handheld wireless communicators include conventional cell phones, smart phones that may include voice, video text message, email and Web access capabilities, Personal Digital Assistants (PDA) with wireless communications capabilities, wireless pagers and Blackberry wireless handheld email devices, but excludes conventional laptop computers. As used herein, "handheld wireless communicator" also includes wearable wireless communicators that may be integrated into eyeglasses, a wristband, a backpack and/or other article of clothing. Handheld wireless communicators may have an operational surface area of about 50 square inches or less, and may include a display of about 30 square inches or less. In particular, some smart phones may have an operational surface area of about 20 square inches or less, and a display of about 12 square inches or less.

Although handheld wireless communicators have become ubiquitous, their small displays may make some applications cumbersome.

### Summary of the Invention

The object of the present invention is to provide a videoconferencing method, a handheld wireless communicator, and a videoconferencing computer program product according to the appended claims.

### Brief Description of the Drawings

Figure 1 is a block diagram of a handheld wireless communicator and an external display screen that are configured according to various exemplary embodiments of the present invention.
Figure 2 is a block diagram of a handheld wireless communicator according to various embodiments of the present invention.
Figures 3-8 are block diagrams of a handheld wireless communicator and an external display screen that are configured according to various other exemplary embodiments of the present invention.
Figures 9 and 10 are flowcharts of operations that may be performed according to various exemplary embodiments of the present invention.
Figure 11 illustrates a wireless communications device according to one embodiment of the present invention.
Figure 12 illustrates how the wireless communications device might interact with an external display device and external audio device according to one embodiment of the present invention.
Figure 13 is a flow chart illustrating a method according to one embodiment of the present invention.
Figure 14 is a perspective view of an alternate embodiment of the present invention.
Figure 15 is a flow chart illustrating a method according to an alternate embodiment of the present invention.

### Detailed Description

The present invention now will be described more fully hereinafter with reference to the accompanying drawings, in which illustrative embodiments of the invention are shown. In the drawings, the relative sizes of the first and second display screens may be exaggerated for clarity, whereas, in actual embodiments, the second display screen may be much larger than shown. This invention may be embodied in many different forms and should not be construed as limited to the embodiments set forth herein. Rather, these embodiments are provided so that this disclosure will be thorough and complete, and will fully convey the scope of the invention to those skilled in the art.

It will be understood that when an element is referred to as being "coupled" or "connected" to another element, it can be directly coupled or connected to the other element or intervening elements may also be present. In contrast, when an element is referred to as being "directly coupled" or "directly connected" to another element, there are no intervening elements present. Like numbers refer to like elements throughout. As used herein the term "and/or" includes any and all combinations of one or more of the associated listed items and may be abbreviated by "/".

It will also be understood that, although the terms first, second, etc. may be used herein to describe various elements, these elements should not be limited by these terms. These terms are only used to distinguish one element from another element. Thus, a first display screen discussed below could be termed a second display screen without departing from the teachings of the present invention.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises," "comprising," "includes" and/or "including" when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As will be appreciated by one of skill in the art, the present invention may be embodied as a method, device, system or computer program product. Accordingly, the present invention may take the form of an entirely hardware embodiment, an entirely software embodiment or an embodiment combining software and hardware aspects, all generally referred to herein as a "circuit" or "module." Furthermore, the present invention may take the form of a computer program product on a computer-usable storage medium having computer-usable program code embodied in the medium. Any suitable computer readable medium may be utilized including hard disks, CD-ROMs, optical storage devices, a transmission media such as those supporting the Internet or an intranet, or magnetic storage devices.

Computer program code for carrying out operations of the present invention may be written in an object oriented programming language such as Java®, Smalltalk or C++. However, the computer program code for carrying out operations of the present invention may also be written in conventional procedural programming languages, such as the "C" programming language. The program code may execute entirely on the handheld wireless communicator or only partly on the handheld wireless communicator and partly on a remote computer. In the latter scenario, the remote computer may be connected to the handheld wireless communicator through a wired and/or wireless local area network (LAN) and/or wide area network (WAN), or the connection may be made to an external computer (for example, through the Internet using an Internet Service Provider).

The present invention is described in part below with reference to flowchart illustrations and/or block diagrams of methods, systems, devices and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a controller of a handheld wireless communicator to produce a handheld wireless communicator, such that the instructions, which execute via the controller of the handheld wireless communicator create means or modules for implementing the functions/acts specified in the flowchart and/or block diagram block or blocks.

These computer program instructions may also be stored in a computer-readable memory that can direct a the handheld wireless communicator to function in a particular manner, such that the instructions stored in the computer-readable memory produce an article of manufacture including computer-readable program code which implements the function/act specified in the flowchart and/or block diagram block or blocks.

The computer program instructions may also be loaded onto a handheld wireless communicator to cause a series of operational steps to be performed on the handheld wireless communicator to produce a computer implemented process such that the instructions which execute on the handheld wireless communicator provide steps for implementing the functions/acts specified in the flowchart and/or block diagram block or blocks.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved.

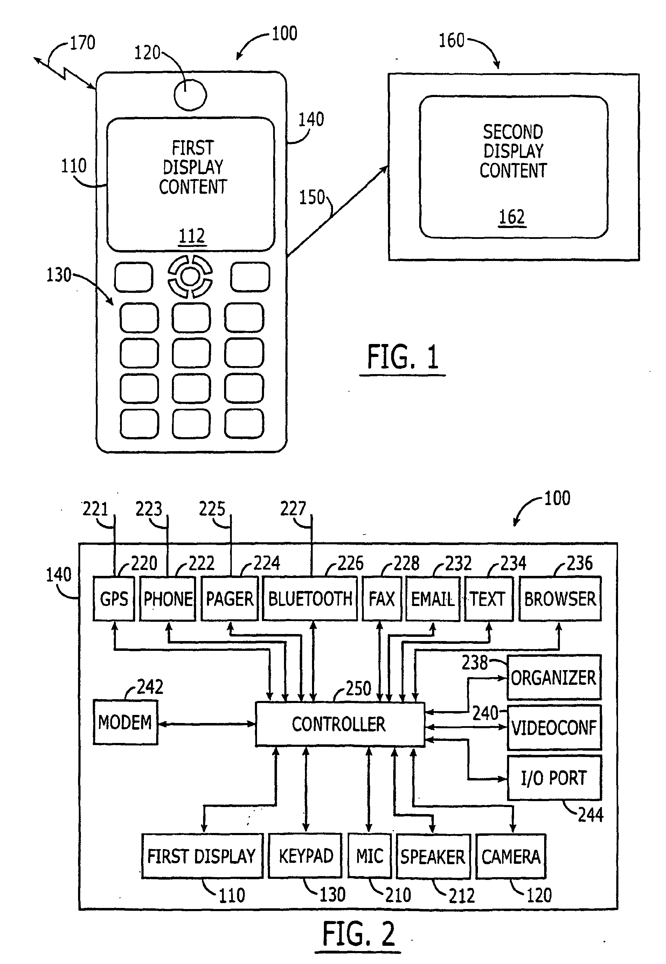

Figure 1 schematically illustrates content displaying methods, handheld wireless communicators and computer program products according to various exemplary embodiments of the present invention. As shown in Figure 1, a handheld wireless communicator **100** includes a first display screen **110,** a camera **120** and a keypad **130,** in a housing **140** and is configured to provide wireless voice, data and/or multimedia communications **170.** Although housing **140** is illustrated in Figure 1 as a one-piece "brick" housing, multi-piece housings such as "clamshell" housings also may be provided. Wearable housings also may be provided. According to some embodiments of the present invention, first display content **112** is displayed on the first display screen **110** of the handheld wireless communicator **100,** while simultaneously sending, via a wired and/or wireless link **150,** second display content **162** that is different from the first display content **112,** from the handheld wireless communicator **100** to an external display screen **160.** The external display screen **160** may be a standalone display screen, such as a projector screen or TV monitor, or may be a display screen that is associated with a laptop, desktop or other computing device, that is larger than, and/or may have higher addressability than, the first display screen **110** of the handheld wireless communicator **100.** In some embodiments, the second display content **162** is different from, but contextually related to, the first display content **112.** Many exemplary embodiments will be described below.

Figure 2 is a simplified block diagram of a handheld wireless communicator, such as the handheld wireless communicator **100** of Figure 1. A user interface includes the first display **110,** the camera **120** and the keypad **130,** and may also include a microphone **210** and a speaker **212.** A Global Positioning System (GPS) receiver **220,** a wireless radiotelephone **222,** a pager **224,** a short range wireless system, such as a BLUETOOTH system **226,** a facsimile system **228,** an email system **232,** a text messaging system **234,** a Web browser **236,** an organizer **238** and/or a videoconference system **240** also may be provided. It will be understood that only some of these elements may be provided and that one or more of these elements may be integrated or combined in whole or in part. The GPS receiver **220,** wireless radiotelephone **222,** pager **224** and short range wireless system **226** may include separate antennas **221, 223, 225** and **227,** respectively, or one or more of these antennas may be combined. The handheld wireless communicator **100** may also include a wireless or wired modem **242,** and a wired I/O port **244** also may be provided. The design of the individual blocks of Figure 2 as described in this paragraph are well known to those having skill in the art, and need not be described further herein.

A controller **250** also is provided for controlling some or all of the blocks of Figure 2. The controller **250** may be embodied as systems (apparatus), methods and/or computer program products. Accordingly, the present invention may take the form of an entirely hardware embodiment, an entirely software embodiment, or an embodiment combining software and hardware aspects. The controller may be designed to provide the functionality described in Figures 1 and 3-10, in addition to conventional functions of controlling the various elements of Figure 2.

Referring again to Figures 1 and 2, some embodiments of the present invention can provide a controller **250** that is configured to display first display content **112** on the first display screen **110** of the handheld wireless communicator 100, while simultaneously sending the second display content **162** that is different from the first display content **112,** from the handheld wireless communicator **100** to the external display screen **160** using the short range wireless system **226,** the modem **242,** the email system **232,** the text messaging system **224,** the browser **236** and/or the I/O port **244,** to provide the wired and/or wireless link **150.** For example, the short range wireless system **226** can provide a wireless link **150** between the handheld wireless communicator **100** and the external display screen **160,** whereas the modem **242** and/or the I/O port **244** can provide a wired link **150** between the handheld wireless communicator **100** and the external display screen **160.**

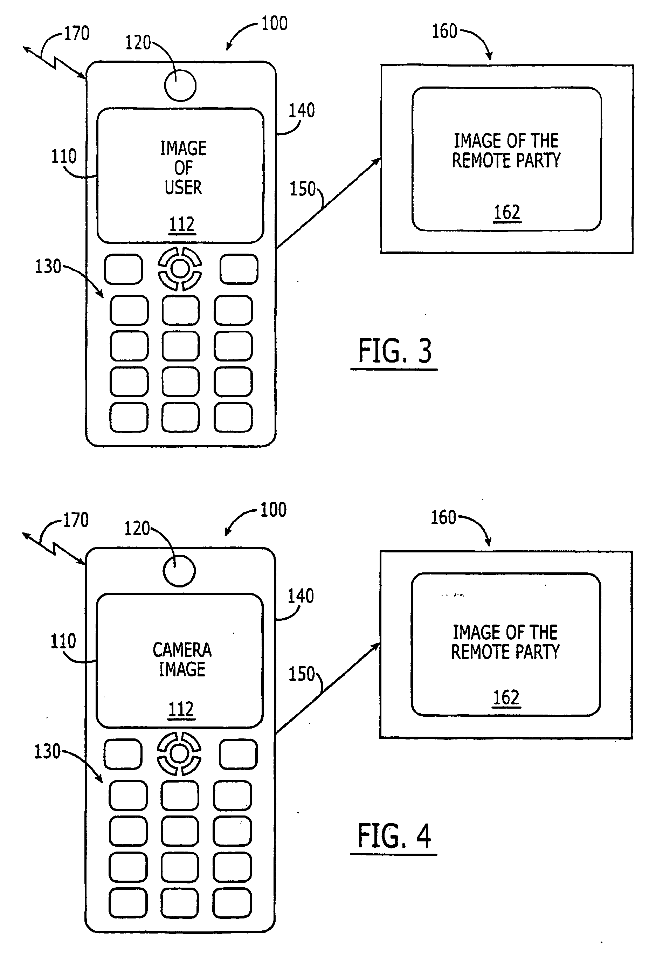

Figure 3 illustrates embodiments of the present invention for use in videoconferencing. In videoconferencing, a videoconferencing module, such as the videoconferencing module **240** of Figure 2, may be used to videoconference a handheld wireless communicator **100** with a remote party. As shown in Figure 3, in videoconferencing embodiments, the second display content **162** on the second display screen **160** can comprise an image of the remote party. Moreover, in some embodiments, as shown in Figure 3, the first display content **112** on the first display screen **110** can comprise an image of the user of the handheld wireless communicator that may be obtained from the camera **120.** In still other embodiments, as shown in Figure 4, the first display content **112** can comprise an image that is generated by the camera **120** during the videoconferencing. In yet other embodiments, call related information and/or other information may be displayed on the first display screen **110,** if a camera **120** is not available and/or the user chooses not to use the camera image. In still other embodiments, audio content from the remote party also may be conveyed to and played at the second display **160.** Embodiments of Figures 3 and 4 also may be combined.

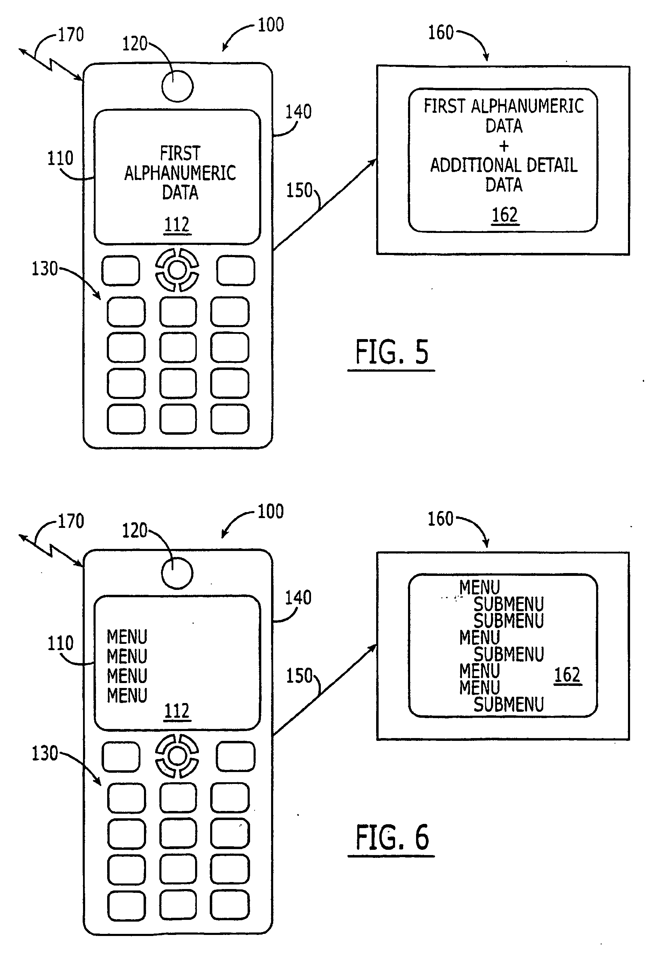

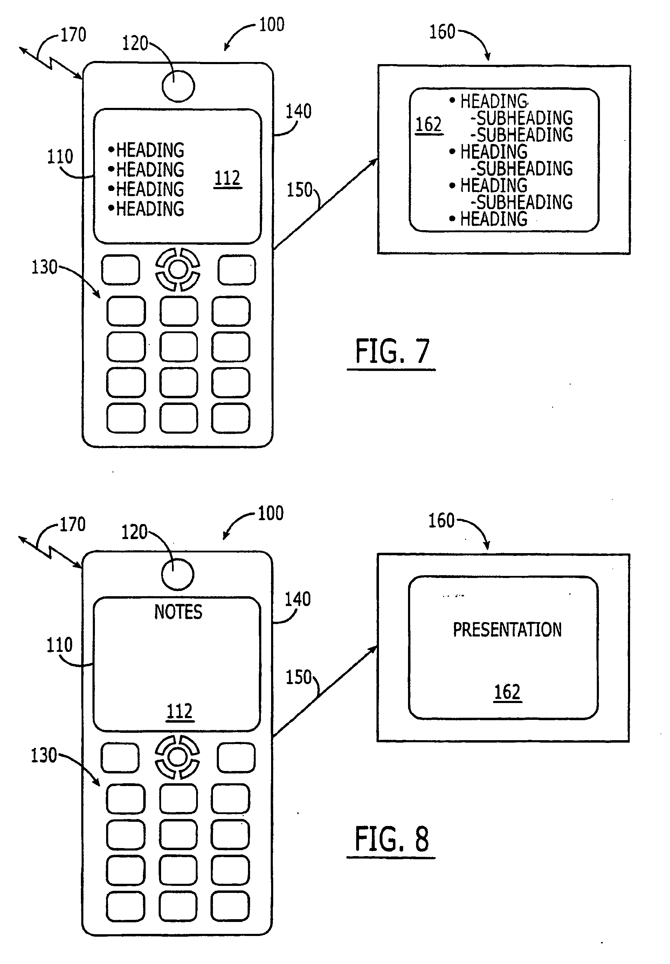

Figure 5 illustrates embodiments of the present invention that may be used during data display. In these embodiments, the first display content **112** that is displayed on the first display **110** comprises first alphanumeric data, and the second display content **162** that is displayed on the external display **160** comprises the first alphanumeric data and additional detail data concerning the first alphanumeric data. In some embodiments, as shown in Figure 6, the first display content **112** comprises menu selections, and the second display content **162** comprises the menu selections and at least one submenu selection. In Figure 7, first display content **112** comprises presentation headings (commonly referred to as presentation "bullets"), and the second display content **162** comprises the presentation headings and at least one presentation subheading. In other embodiments, as shown in Figure 8, the second display content **162** comprises a presentation, and the first display content **112** comprises presenter notes related to the presentation.

Accordingly, in the videoconferencing and alphanumeric data display applications, both the first display screen **110** of the handheld wireless communicator **100** and the external display screen **160** can display different images, each of which is suitable for the respective size, resolution and/or addressability of the first display screen **110** and the external display screen **160.** In videoconferencing, the image of the remote party (Figures 3 and 4) may be displayed on the external display screen at relatively high resolution/addressability and large size, whereas the camera image (Figure 4) or image of the user (Figure 3) may be displayed on the relatively small, relatively low resolution/addressability display **110** of the handheld wireless communicator **100.** In data display applications, additional levels of detail (Figures 5-7) may be presented on the external display screen **160** relative to the display screen **110** of the handheld wireless communicator **100,** or brief presenter notes may be presented on the first display screen **110** of the handheld wireless communicator **100** (Figure 8).

Additional discussion of videoconferencing embodiments of the present invention (Figures 1-4) now will be provided. In these embodiments, when the handheld wireless communicator **100** receives or initiates a video call, the remote party can be displayed automatically on a larger display screen **160,** with the handheld wireless communicator display screen **110** switching to monitoring the local view/camera. A user selectable switch, which may be a hard and/or soft switch, can allow for switching the external display screen **160** on and off. Thus, when a video call is connected, the first display screen **110** of the handheld wireless communicator **100** can display the remote party, as well as a camera image in a corner of the display screen **110,** as is conventional. However, upon user selection, the image of the remote party may be sent to the external display screen **160,** while the first display screen **110** of the handheld wireless communicator **100** displays the image of the user (Figure 3) or the camera image (Figure 4).

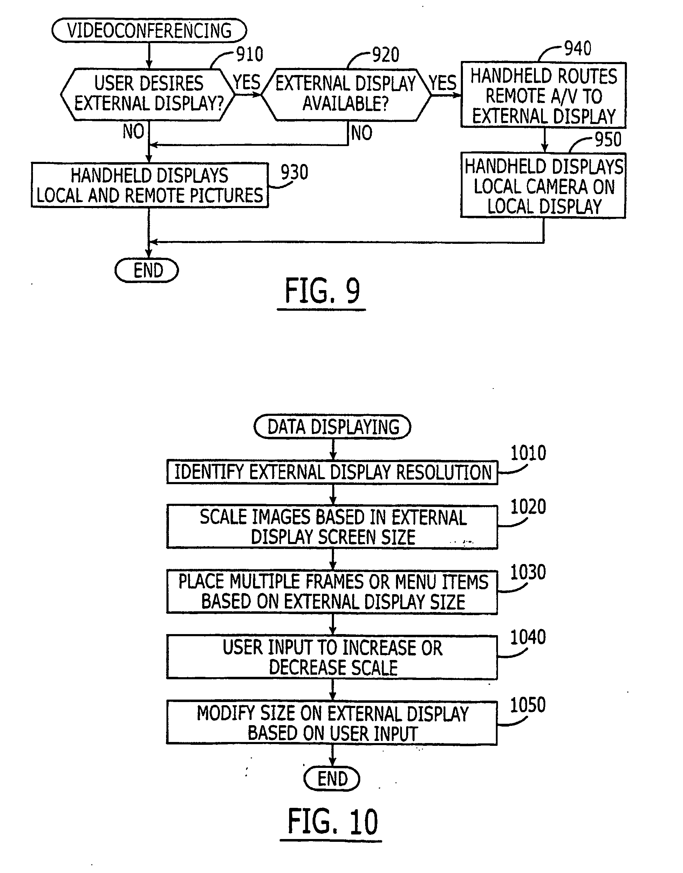

Figure 9 is a flowchart of operations that may be used for videoconferencing according to exemplary embodiments of the present invention. As shown in Figure 9, when videoconferencing begins (by receiving or initiating a videoconference call), a determination is made at Block **910** as to whether the user of the handheld wireless communicator desires to use an external display screen. This determination may be made by user selection of a preference and/or in response to a default setting. If an external display screen **160** is desired, then at Block **920,** a determination is made as to whether an external display screen **160** is available. If the user does not desire to use an external display screen or an external display screen is not available, then the handheld wireless communicator **100** displays the local and remote pictures in a conventional manner, as shown at Block **930.** Alternatively, if the user desires to use an external display screen, and an external display screen **160** is available, then at Block **940,** the handheld wireless communicator routes the remote video information to the external display screen **160,** while simultaneously, at Block **950,** displaying the local camera and on the local display screen.

It will be understood that, in Block **940,** when the video is routed to the external display screen **160,** it may also be desirable for the audio to be routed to the external display screen **160** for better intelligibility. Alternatively, a user may be allowed to select whether audio is to remain at the handheld wireless communicator **100** and/or to be routed to the external display screen **160.** It also will be understood that the external display screen **160** for displaying the remote party can be a conventional display device that can include a generic adapter that can allow the use of display devices that are usually found in households or businesses. These adapters can include an audiovisual adapter, video plus audio adapters and/or adapters that can multiplex the audiovisual data onto a single digital link, such as a FIREWIRE link. Multiple remote parties can be displayed on the larger external display screen **160** with varied visibility.

Additional discussion of alphanumeric data displaying (Figures 1-2 and 5-8) now will be provided. In particular, display screens **110** on handheld wireless communicators **100** conventionally are relatively small, and may be QVGA or lower in resolution/addressability. For certain applications, such as Microsoft PowerPoint^{™} or other presentations, the handheld wireless communicator **100** can output higher resolution/addressability images to an external device **160** for display according to some embodiments of the present invention. Accordingly, in some embodiments of the present invention, the handheld wireless communicator **100** can have multiple images associated with a particular presentation screen or topic. These images may be different, in that the alphanumeric data detail level is different on these two screens (Figures 5-7), or the data may be different but contextually related (Figure 8). An example of different detail level would be a screen having, for example, 20 menu selections on a high resolution external display screen **160,** such as a TV or video monitor, whereas the handheld wireless communicator **100** may show only four menu selections, and use scrolling to show the other selections. An example of different content may be a PowerPoint presentation wherein the presentation slides are sent to the external display screen, whereas only the speaking points or main bullets are displayed on the handheld wireless communicator **100.**

Figure 10 is a flowchart of operations for displaying data on an external display screen **160** according to various embodiments of the present invention. In response to a user indication that a user desires to use an external display screen and an indication that an external display screen is available, which may be similar to Blocks **910** and **920** of Figure 9, the resolution of the external display screen is identified at Block **1010.** The image is then scaled at Block **1020** based on the external display screen size. The user may elect, at Block **1030,** to place multiple frames or menu items in the image based on the external display screen size. The user may also provide an input at Block **1040** to increase or decrease the scale. Finally, at Block **1050,** the size of the image on the external display is modified based on the user input.

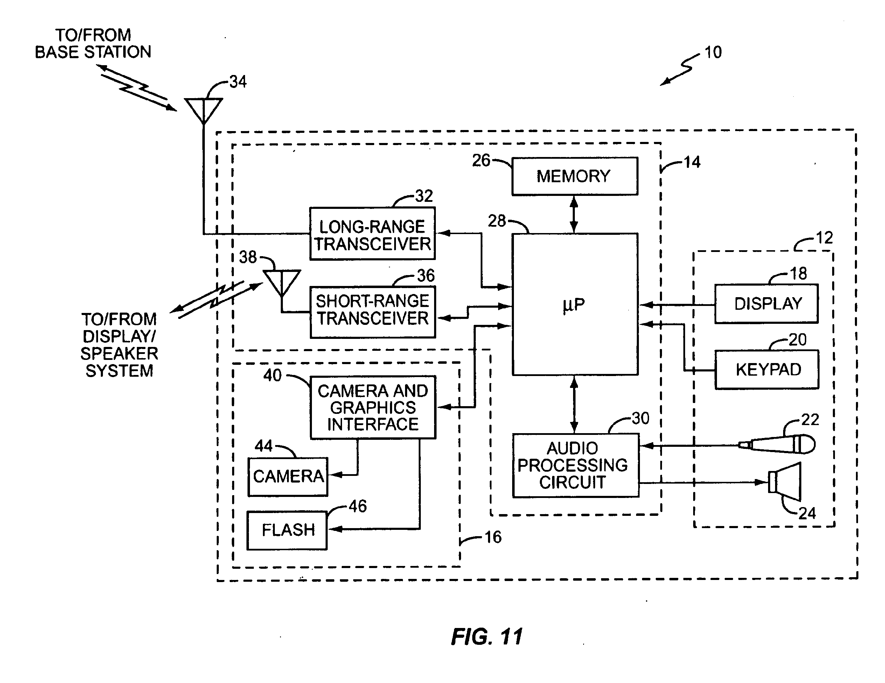

Figure 11 illustrates one embodiment of a camera-equipped wireless communications device **10** according to the present invention. The figures illustrate device **10** in terms of a camera-equipped cellular telephone. However, those skilled in the art will readily appreciate that the present invention is applicable to any consumer electronics device having multimedia capability including, but not limited to, Personal Digital Assistants (PDAs), Personal Communication Services (PCS) devices, satellite telephones, palm or laptop computers, camcorders, digital cameras, and the like.

As seen in Figure 11, device **10** comprises a user interface **12,** communications circuitry **14,** and a camera assembly **16.** User interface **12** includes a display **18,** a keypad **20,** a microphone **22,** and a speaker **24.** Display **18** and speaker **24** are examples of multimedia rendering devices internal to the wireless communication device **10.** Display **18** permits users to view dialed digits, call status, menu options, and other service information. Display **18** also acts as a viewfinder that permits users to view images and video captured by camera assembly **16,** as well as remote images and video captured and transmitted by one or more remote parties as part of a teleconference call. Keypad **20,** disposed on a face of device **10,** includes an alphanumeric keypad and other input controls such as a joystick, button controls, or dials (not shown). Keypad **20** allows the operator to dial numbers, enter commands, and select options from menu systems. Additionally, keypad **20** permits the user to control the functionality of camera assembly **16.**

Microphone **22** and speaker **24** are communicatively coupled to controller **28** via audio processing circuit **30,** and may be comprised of any type of audio transducer known in the art. Microphone **22** converts the user's speech into electrical audio signals for transmission to remote parties, while speaker **24** converts audio signals received from remote parties into audible sound that can be heard by the user.

Communications circuitry **14** comprises memory **26,** a controller **28,** an audio processing circuit **30,** a long-range transceiver **32** having an antenna **34,** and a short-range transceiver **36** having an antenna **38.** Memory **26** represents the entire hierarchy of memory in device **10,** and may include both random access memory (RAM) and read-only memory (ROM). Computer program instructions and data required for operation are stored in non-volatile memory, such as EPROM, EEPROM, and/or flash memory, and may be implemented as discrete devices, stacked devices, or integrated with controller **28.**

Controller **28** is a microprocessor, for example, and controls the operation of device **10** according to programs stored in memory **26,** and may use known techniques to digitally alter images and/or video captured by camera assembly **16.** The control functions may be implemented in a single microprocessor, or in multiple microprocessors. Suitable controllers may include, for example, both general purpose and special purpose microprocessors and digital signal processors. Controller **28** may interface with audio processing circuit **30,** which provides basic analog output signals to speaker **24** and receives analog audio inputs from microphone **22.** Controller **28,** as will be described in more detail below, may control the output of multimedia data, such as image, video, and audio data, based on the type of multimedia data and the availability and/or capabilities of one or more remote multimedia capable systems.

Long-range transceiver **32** receives signals from and transmits signals to one or more base stations in a wireless communications network. Long-range transceiver **32** is a fully functional cellular radio transceiver, and operates according to any known standard, including Global System for Mobile Communications (GSM), TIA/EIA-136, cdmaOne, cdma2000, UMTS, and Wideband CDMA. According to one embodiment of the present invention, signals related to a teleconference call with one or more remote parties are transmitted and received by long-range transceiver **32.**

Short-range transceiver **36** transmits signals to and receives signals from one or more corresponding short-range transceivers, as will be described in more detail below. In one embodiment, short-range transceiver **36** is a BLUETOOTH transceiver or RF transceiver operating according to the IEEE 802.11 (b) or 802.11 (g) standards. As is well known in the art, BLUETOOTH is a universal radio interface that permits the creation of *ad hoc* networks, and is particularly well suited for communications over short distances. It should be understood, however, that short-range transceiver **36** may utilize any technology known in the art operable to transmit and receive signals over short distances, such as infrared, for example.

Camera assembly **16** includes a camera and graphics interface **40,** a camera **44,** and an optional integrated flash **46.** Camera and graphics interface **40** interfaces camera **44** with controller **28** and/or user interface **12.** Commands and data to and from camera **44** are typically processed by camera and graphics interface **40** as is known in the art. While the camera and graphics interface **40** is shown as a separate component in Figure 11, it will be understood that camera and graphics interface **40** may be incorporated with controller **28.**

Camera **44** may be any camera known in the art, and may include such elements as a lens assembly (not shown), an image sensor (not shown), and an image processor (not shown). Camera **44** captures images that can be digitized and stored in memory **26,** digitally altered by controller **28,** or output to display **18.** Flash **46** emits a flash of light to illuminate, if required, the subject of the image being captured. As is known in the art, camera **44** may capture images and/or video for transmission over a wireless network via long-range transceiver **32,** such as when the user is engaged in a teleconference call.

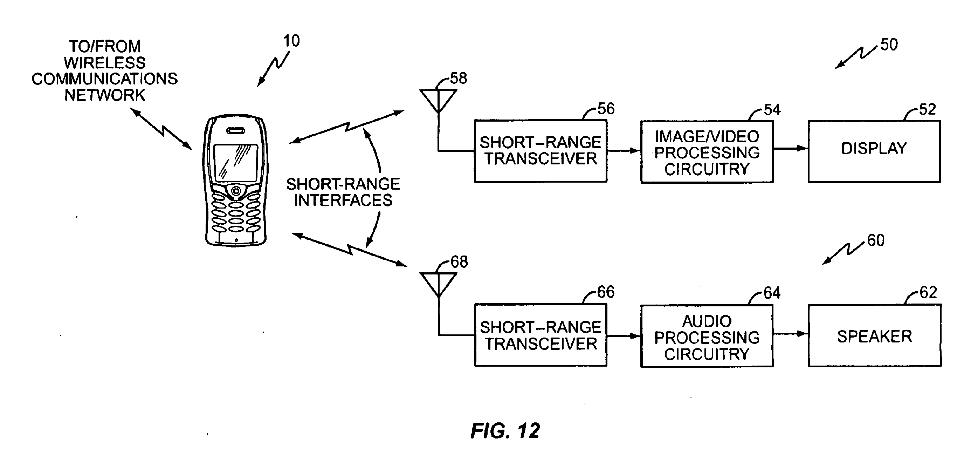

Figure 12 illustrates one embodiment of the present invention wherein the user of wireless communications device **10** is participating in a teleconference call with one or more remote parties. According to the present invention, wireless communication device **10** provides the video images and associated audio signals transmitted by the one or more remote parties to external display device **50** and an external audio device **60.**

External display device **50** comprises a display **52,** image processing circuitry **54,** and a short-range transceiver **56.** It should be understood that display **52,** image processing circuitry **54,** and short-range transceiver might be a unitary device, or alternatively, a collection if interconnected components. Display **52** comprises one or more display screens that may be either fixed or mobile, and is coupled to the short-range transceiver **56** via image processing circuitry **54.** Image signals received from device **10** via a short-range interface are displayed on display **52.** Display **52** generally is able to display the received image signals at a higher resolution than the display **18** provided on wireless communication device **10.** In one embodiment, display **52** is a video projection screen associated with a fixed video projection system of the type typically found in conference rooms or office environments. In another embodiment, display **52** is a display screen disposed on a computing device, such as a laptop or desktop computer. In still other embodiments, display **52** is a plasma screen or a user's home television set.

Image processing circuitry **54** comprises one or more processors (not shown), memory (not shown), and one or more devices configured to decompress and render image and/or video signals as is known in the art prior to sending the image and or video signals to display **52.** Image processing circuitry **54** may use any compression standard known in the art, such as MPEG 4, for example.

Short-range transceiver **56** is coupled to antenna **58,** and is capable of detecting short-range transceiver **36** of wireless communication device **10** when device **10** comes within close geographical proximity to display **52.** In one embodiment, short-range transceiver **56** detects short-range transceiver **36,** and establishes an ad-hoc communications link according to well-known BLUETOOTH protocols. During the establishment of the communications link, various parameters, such as protocol version, capabilities, and device identities, may be negotiated between remote display system **50** and wireless communication device **10.** In addition, synchronization and authentication of external display device **50** and/or wireless communication device **10** may occur according to well-known standards. Once the link is established, wireless communication device **10** may transmit image and/or video signals received from the wireless communications network to external display device **50.**

External audio device **60** comprises one or more speakers **62,** audio processing circuitry **64,** and a short-range transceiver **66.** Like the external display device **50,** the components of external audio device **60** may or may not be structured as a unitary device. In addition, it is possible, but not required, that external display device 50 and external audio device **60** be a single system capable of outputting both the received image/video signals and audio signals received from wireless communications device **10.**

Speaker **62** comprises one or more speakers, such as conic speakers, flat-panel speakers, or other known speakers, capable of rendering audio signals as audible sound to the user of wireless communication device **10.** Audio signals associated with the image sent to external display device **50** are received from wireless communication device **10** via a short-range interface and rendered for the user through speaker **62.** In one embodiment, speaker **62** is a sound system associated with external display device **50.** In another embodiment, speaker **62** is a speaker associated with a computing device. Other embodiments contemplate speaker **62** as one or more speakers in a user's home stereo system.

Audio processing circuitry **64** receives an audio signal from wireless communication device **10** over a short-range interface, decompresses the signal, and outputs the decompressed signal to speaker **62** to produce audible sound. Short-range transceiver **66** includes an antenna **68,** and is capable of the same sort of functionality as short-range transceiver **36** and **56.** Like short-range transceivers **36** and **56,** short-range transceiver 66 is operates according to well-known BLUETOOTH standards to detect other short-range transceivers, such as short-range transceiver **36,** to create and maintain *ad hoc* networks. Once a communications link between short-range transceivers **36** and **66** is established, wireless communication device **10** may send audio associated with a teleconference call to speaker **62.**

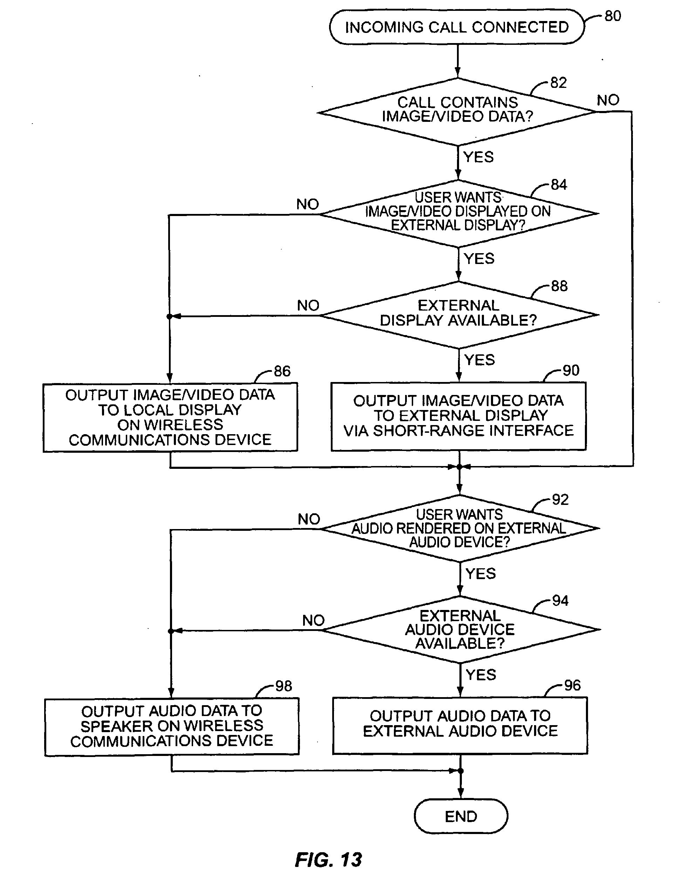

As previously stated, some embodiments of the present invention permit a user participating in a teleconference to output the image/video and audio signals to external display and/or audio devices **50, 60** rather than to the user's wireless communications device **10.** This permits the user to view the image/video of the remote teleconference call participants and/or listen to the audio without the constraints necessarily inherent with device **10.** Figure 13 illustrates one method by which the present invention may occur.

The call flow of Figure 13 begins when the user of wireless communication device **10** receives an incoming call (Block **80)** over a wireless communications network via long-range transceiver **32.** Controller **28** examines the data in the received signals to determine whether the received signal contained image/video data (Block **82).** For example, the headers or control parts of many messages operating according to known standards contain indicators or flags that identify the type of data contained in the message as image or video data. In these cases, controller **28** would determine whether the incoming data is image/video data based on this indicator. In other cases, the image/video data might include one or more tags embedded in the data, and known to wireless communication device **10** *a priori.* Controller **28** of wireless communication device **10** would read the one or more tags as part of the data processing, and use the one or more tags to determine whether the data was image/video data. However, the present invention is not limited to any one method, as any method may be used to differentiate image/video data from other types of data, for example, audio data.

If the received signal did not contain image/video data, controller **28** would check to determine whether the received signal contained audio data (Block **92).** However, if the received signal contained image/video data, controller **28** would determine whether the user desired to output the image/video data to display **18** on wireless communications device **10,** or display **52** of external display device **50** (Block **84).** This decision may be accomplished in any number of ways. In one embodiment, for example, the user selects between display **18** and display **52** by manually entering a destination ID for display **52** using keypad **20.** In another embodiment, controller **28** reads a user-defined configuration profile from memory **26,** and routes the image/video data based on the information in the profile. In other embodiments, controller **28** will automatically output all image/video data to display **52** if display **52** is available. Still other embodiments will output image/video data to both display **18** and display **52.** Should the user opt not to output the signal to display **52,** controller **28** will output the image/video data to display **18** on wireless communication device **10** (Block **86).** Otherwise, controller **28** will check the availability of display **52** (Block **88).** If display **52** is available, controller **28** will redirect the image/video data associated with the incoming call to the display **52** via the established short-range interface (Block **90).**

Those skilled in the art will appreciate that checking the availability of display **52** from device **10** may be accomplished through many known methods. One such method is by using the BLUETOOTH paging mechanism. The creation and maintenance of *ad hoc* networks is well known to those skilled in the art. Briefly, BLUTOOTH devices are able to detect the presence of other similarly enabled devices, and create ad hoc networks. The BLUETOOTH standards include a mechanism to negotiate and establish a communications channel with the detected devices, and to determine the capabilities of the detected devices. The detection of the devices, establishment of the communications channel, and capability negotiation may be done in advance of receiving the incoming call. In the present invention, the geographical area in which the short-range transceivers **36, 56** might detect each other roughly coincides with an area that the user might be able to view display **52.**

Next, controller **28** will determine whether the user wishes to send the audio data associated with the image/video data to speaker **24** of wireless communication device **10,** or speaker **62** of external audio device **60** (Block **92).** If the user does not want to hear the audio over speaker **52,** controller **28** will direct the audio signals to speaker **24** of device **10** (Block **98).** Otherwise, controller **28** will determine whether external audio device **60** is available (Block **94).** Like the creation and establishment of the *ad hoc* network above, the BLUTOOTH paging mechanism may be used to create and maintain a communications link between short-range transceiver **36** and short-range transceiver **66.** If external audio device **60** is available (Block **94),** controller **28** will re-direct the audio data to external audio device **60** (Block **96),** which will render the audio data as audible sound over speaker **62.**

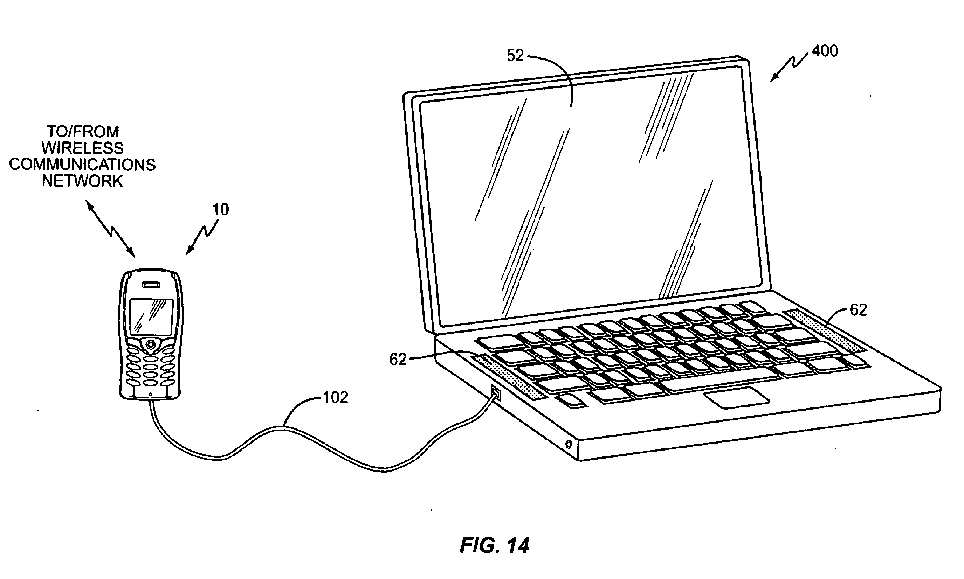

The previous embodiment illustrated how wireless communication device **10** might output the image/video and audio data associated with an incoming call to external display and audio devices **50, 60** using one or more established ad-hoc short-range interfaces. However, the present invention is not so limited. In an alternate embodiment, shown in Figure 14, device **10** outputs the audio and image/video signals to a computing device **400** that is not equipped with a short-range transceiver. In this embodiment, both wireless communication device **10** and computing device **400** are FIREWIRE enabled, and connected via a FIREWIRE cable **102.** As known in the art, FIREWIRE is a cross-platform implementation of a high-speed serial data bus, and permits the transfer of large amounts of audio and/or image data between devices at very high speeds. The FIREWIRE standards are defined by the IEEE 1394-1995, IEEE 1394a-2000, and IEEE 1394b standards, which are incorporated herein in their entirety.

In Figure 14, device **10** receives the audio and image/video data associated with an incoming call from the wireless communications network. Controller **28** may be configured to translate the incoming data from whatever protocol they are received to a protocol compatible with the FIREWIRE standards. Controller **28** then transmits the audio and image/video data to computing device **400,** which displays the images/video on display **52,** and renders the audio through one or more speakers **62.**

In addition to outputting audio and image/video data received from wireless communication device **10,** computing device **400** may be used to upload multimedia data to wireless communication device **10** for later playback on remote display system **50,** remote audio system **60,** or another computing device **400.** For example, users regularly create slide shows and other business articles as part of a job function. Once created, users must often transfer the completed multimedia files over a network to another system for presentation to other personnel, or manually carry the machine storing the files to a common meeting area. Using the present invention, however, a user who creates a business article having multimedia components, such as a slide show, simply transfers the files from computing device **400** to wireless communication device **10.** Thereafter, wireless communication device **10** is used to output the multimedia data to external display device **50,** external audio device **60,** or another computing device **400.**

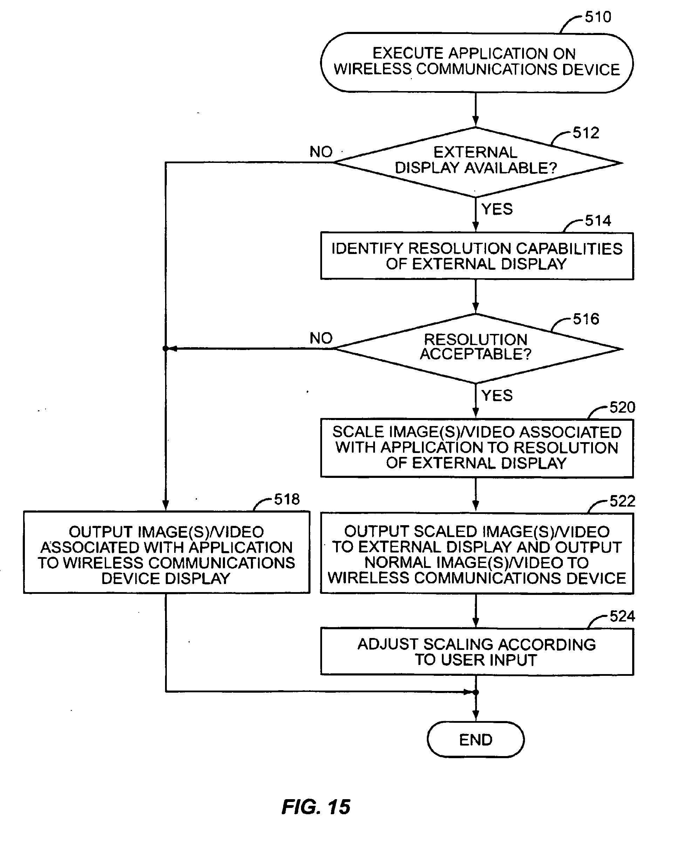

One illustration of this embodiment is shown in Figure 15. In Figure 15, the user has already created the multimedia data containing audio and image/video components on computing device **400,** and downloaded the data to device **10.** This may be accomplished using FIREWIRE as shown above, or alternatively, by wirelessly downloading the data via a short-range or long-range interface. In these latter two download methods, computing device **400** would be equipped with a short-range transceiver or a long-range transceiver, or both. Other methods of transferring the multimedia data may also be envisioned.

In Figure 15, the user would execute an application stored on the wireless communications device **10** (Block **510).** Wireless communication device **10** would detect whether a display **52** was available, for example, via a short-range interface or FIREWIRE cable connection (Block **512).** If display **52** is not available or present, the user could simply view the output on display **18** (Block **518)** of wireless communication device **10.** If display **52** was available, controller **28** would then identify the resolution of display **52** (Block **514),** and determine whether the resolution was acceptable to display the particular multimedia data (Block **516).** The resolution of display **52** could be determined during the establishment of the short-range interface, or alternatively, in response to a request from wireless communication device **10** once the communication link was established. If the resolution of display **52** is unacceptable, the user could simply view the image/video on display **18** of wireless communication device **10** (Block **518).** Otherwise, controller **28** would scale the video and or images to be displayed to the resolution of display **52** (Block **520).** Once scaled, controller **28** would transmit the image and/or video data for display on display **52** (Block **522).** The user could then use keypad 20, for example, to adjust the scaling or other properties of the displayed video or images (Block **524).**

It should be noted that the present application mentions the BLUETOOTH and FIREWIRE standards specifically as methods to effect transfer of the multimedia data to various remote systems. However, those skilled in the art will readily appreciate that other protocols and various adapters may be used in place of the mentioned protocols to perform the same functionality. For example, device **10** may transmit the multimedia data to one or more external multimedia rendering devices by direct wiring via USB ports, Audio/Video adapters, or other digital video and audio interfaces. In addition, wireless standards other than BLUETOOTH, such as infrared, may be utilized to effect data transfer to and from wireless communication device **10.** Further, controller **28** may be configured to send multimedia data to multiple displays **52** and/or speakers **62.**

In the drawings and specification, there have been disclosed embodiments of the invention and, although specific terms are employed, they are used in a generic and descriptive sense only and not for purposes of limitation, the scope of the invention being set forth in the following claims.

## Claims

1. A videoconferencing method comprising:
videoconferencing a user of a handheld wireless communicator (100) with a remote party using the handheld wireless communicator, wherein the handheld wireless communicator also includes a display screen (110) and a camera (120); and
displaying an image that is generated by the camera on the display screen of the handheld wireless communicator while simultaneously sending an image of the remote party to an external display screen (160), during the videoconferencing.

2. A method according to Claim 1 wherein the image that is generated by the camera comprises an image of the user of the handheld wireless communicator.

3. A method according to Claim 1 wherein videoconferencing further comprises sending audio of the remote party from the handheld wireless communicator to an external speaker (62).

4. A method according to Claim 1 wherein videoconferencing further comprises sending audio of the remote party from the handheld wireless communicator to an external speaker (62) of the external display screen (160).

5. A method according to Claim 1 further comprising:
scaling the image of the remote party to conform to a resolution of the external display screen.

6. A handheld wireless communicator (100) comprising:
a handheld wireless communicator housing (140);
a first display screen (110) in the housing;
a camera (120) in the housing; and
a videoconferencing controller (250) that is configured to videoconference a user of the handheld wireless communicator with a remote party using the handheld wireless communicator and to display an image that is generated by the camera on the first display screen while simultaneously sending an image of the remote party to a second display screen (160) that is external of the handheld wireless communicator, during the videoconferencing.

7. A handheld wireless communicator according to Claim 6 wherein the videoconferencing controller is further configured to send audio of the remote party from the handheld wireless communicator to a speaker (62) that is external of the handheld wireless communicator.

8. A handheld wireless communicator according to Claim 6 wherein the second display screen (160) further comprises a speaker (62) and wherein the videoconferencing controller is further configured to send audio of the remote party from the handheld wireless communicator to the speaker.

9. A handheld wireless communicator according to Claim 6 wherein the videoconferencing controller is further configured to scale the image of the remote party to conform to a resolution of the second display screen.

10. A videoconferencing computer program product comprising a computer-readable storage medium (26) having computer- readable program code embodied in the medium, the computer-readable program code comprising:
computer-readable program code that is configured to videoconference a user of a handheld wireless communicator (100) with a remote party using the handheld wireless communicator, wherein the handheld wireless communicator also includes a display screen (110) and a camera (120); and
computer-readable program code that is configured to display an image that is generated by the camera on the display screen of the handheld wireless communicator while simultaneously sending an image of the remote party to an external display screen (160), during the videoconferencing.

11. A computer program product according to Claim 10 wherein the computer-readable program code that is configured to videoconference further comprises computer-readable program code that is configured to send audio of the remote party from the handheld wireless communicator to an external speaker (62).

12. A computer program product according to Claim 10 wherein the computer-readable program code that is configured to videoconference further comprises computer-readable program code that is configured to send audio of the remote party from the handheld wireless communicator to an external speaker (62) of the external display screen (160).

13. A computer program product according to Claim 10 further comprising:
computer-readable program code that is configured to scale the image of the remote party to conform to a resolution of the external display screen.

## Patentansprüche

1. Videokonferenzverfahren, umfassend:
das Herstellen einer Videokonferenz zwischen einem Nutzer eines drahtlosen Kommunikations-Handgeräts (100) und einem entfernten Teilnehmer, der das drahtlos Kommunikations-Handgerät verwendet, wobei das drahtlose Kommunikations-Handgerät auch einen Anzeigebildschirm (110) und eine Kamera (120) enthält; und
das Darstellen eines von der Kamera erzeugten Bilds auf dem Anzeigebildschirm des drahtlosen Kommunikations-Handgeräts, wobei gleichzeitig während der Videokonferenz ein Bild des entfernten Teilnehmers an einen externen Anzeigebildschirm (160) gesendet wird.

2. Verfahren nach Anspruch 1, worin das Bild, das die Kamera erzeugt, ein Bild des Nutzers des drahtlosen Kommunikations-Handgeräts enthält.

3. Verfahren nach Anspruch 1, worin das Durchführen der Videokonferenz zudem das Senden eines Audiosignals des entfernten Teilnehmers vom drahtlosen Kommunikations-Handgerät an einen externen Lautsprecher (62) umfasst.

4. Verfahren nach Anspruch 1, worin das Durchführen der Videokonferenz zudem das Senden eines Audiosignals des entfernten Teilnehmers vom drahtlosen Kommunikations-Handgerät an einen externen Lautsprecher (62) des externen Anzeigebildschirms (160) umfasst.

5. Verfahren nach Anspruch 1, zudem umfassend:
das Skalieren des Bilds des entfernten Teilnehmers, damit es mit einer Auflösung des externen Anzeigebildschirms übereinstimmt.

6. Drahtloses Kommunikations-Handgerät (100), umfassend:
ein Gehäuse (140) für das drahtlose Kommunikations-Handgerät;
einen ersten Anzeigebildschirm (110) im Gehäuse;
eine Kamera (120) im Gehäuse; und
einen Videokonferenz-Controller (250), der dafür konfiguriert ist, eine Videokonferenz zwischen einem Nutzer des drahtlosen Kommunikations-Handgeräts und einem entfernten Teilnehmer herzustellen, der das drahtlose Kommunikations-Handgerät verwendet, und während der Videokonferenz ein von der Kamera erzeugtes Bild auf dem ersten Anzeigebildschirm darzustellen, wobei gleichzeitig ein Bild des entfernten Teilnehmers an einen zweiten Anzeigebildschirm (160) gesendet wird, der sich außerhalb des drahtlosen Kommunikations-Handgeräts befindet.

7. Drahtloses Kommunikations-Handgerät nach Anspruch 6, wobei der Videokonferenz-Controller zudem dafür konfiguriert ist, ein Audiosignal des entfernten Teilnehmers vom drahtlosen Kommunikations-Handgerät an einen Lautsprecher (62) zu senden, der sich außerhalb des drahtlosen Kommunikations-Handgeräts befindet.

8. Drahtloses Kommunikations-Handgerät nach Anspruch 6, wobei der zweite Anzeigebildschirm (160) ferner einen Lautsprecher (62) umfasst, und wobei der Videokonferenz-Controller zudem dafür konfiguriert ist, ein Audiosignal des entfernten Teilnehmers vom drahtlosen Kommunikations-Handgerät an den Lautsprecher zu senden.

9. Drahtloses Kommunikations-Handgerät nach Anspruch 6, wobei der Videokonferenz-Controller weiterhin dafür konfiguriert ist, das Bild des entfernten Teilnehmers zu skalieren, damit es mit einer Auflösung des zweiten Anzeigebildschirms übereinstimmt.

10. Videokonferenz-Computerprogramm-Produkt, umfassend ein computerlesbares Speichermedium (26), wobei computerlesbarer Programmcode in dem Medium verkörpert ist, und der computerlesbare Programmcode umfasst:
einen computerlesbaren Programmcode, der dafür konfiguriert ist, eine Videokonferenz zwischen einem Nutzer eines drahtlosen Kommunikations-Handgeräts (100) und einem entfernten Teilnehmer herzustellen, der das drahtlose Kommunikations-Handgerät verwendet, wobei das drahtlose Kommunikations-Handgerät auch einen Anzeigebildschirm (110) und eine Kamera (120) enthält; und
einen computerlesbaren Programmcode, der dafür konfiguriert ist, ein von der Kamera erzeugtes Bild auf dem Anzeigebildschirm des drahtlosen Kommunikations-Handgeräts darzustellen, und während der Videokonferenz gleichzeitig ein Bild des entfernten Teilnehmers an einen externen Anzeigebildschirm (160) zu senden.

11. Computerprogramm-Produkt nach Anspruch 10, wobei der computerlesbare Programmcode, der dafür konfiguriert ist, eine Videokonferenz herzustellen, zudem einen computerlesbaren Programmcode enthält, der dafür konfiguriert ist, ein Audiosignal des entfernten Teilnehmers vom drahtlosen Kommunikations-Handgerät an einen externen Lautsprecher (62) zu senden.

12. Computerprogramm-Produkt nach Anspruch 10, wobei der computerlesbare Programmcode, der dafür konfiguriert ist, eine Videokonferenz herzustellen, zudem einen computerlesbaren Programmcode enthält, der dafür konfiguriert ist, ein Audiosignal des entfernten Teilnehmers vom drahtlosen Kommunikations-Handgerät an einen externen Lautsprecher (62) des externen Anzeigebildschirms (160) zu senden.

13. Computerprogramm-Produkt nach Anspruch 10, weiterhin umfassend:
einen computerlesbaren Programmcode, der dafür konfiguriert ist, das Bild des entfernten Teilnehmers zu skalieren, damit es mit einer Auflösung des externen Anzeigebildschirms übereinstimmt.

## Revendications

1. Procédé de mise en vidéoconférence comprenant les étapes consistant à :
mettre en vidéoconférence un utilisateur d'un dispositif de communication portable sans fil (100) avec une partie distante en utilisant le dispositif de communication portable sans fil, dans lequel le dispositif de communication portable sans fil comprend également un écran d'affichage (110) et une caméra (120) ; et
afficher une image qui est générée par la caméra sur l'écran d'affichage du dispositif de communication portable sans fil tout en envoyant dans le même temps une image de la partie distante vers un écran d'affichage externe (160), pendant la vidéoconférence.

2. Procédé selon la revendication 1, dans lequel l'image qui est générée par la caméra comprend une image de l'utilisateur du dispositif de communication portable sans fil.

3. Procédé selon la revendication 1, dans lequel la mise en vidéoconférence comprend par ailleurs l'envoi de données audio de la partie distante depuis le dispositif de communication portable sans fil vers un haut-parleur externe (62).

4. Procédé selon la revendication 1, dans lequel la mise en vidéoconférence comprend par ailleurs l'envoi de données audio de la partie distante depuis le dispositif de communication portable sans fil vers un haut-parleur externe (62) de l'écran d'affichage externe (160).

5. Procédé selon la revendication 1, comprenant par ailleurs l'étape consistant à :
étalonner l'image de la partie distante de façon à obtenir une conformité avec une résolution de l'écran d'affichage externe.

6. Dispositif de communication portable sans fil (100) comprenant :
un boîtier (140) de dispositif de communication portable sans fil ;
un premier écran d'affichage (110) dans le boîtier ;
une caméra (120) dans le boîtier ; et
un dispositif de commande de mise en vidéoconférence (250) qui est configuré pour mettre en vidéoconférence un utilisateur du dispositif de communication portable sans fil avec une partie distante en utilisant le dispositif de communication portable sans fil, et pour afficher une image qui est générée par la caméra sur le premier écran d'affichage tout en envoyant dans le même temps une image de la partie distante vers un second écran d'affichage externe (160) qui est externe au dispositif de communication portable sans fil, pendant la vidéoconférence.

7. Dispositif de communication portable sans fil selon la revendication 6, dans lequel le dispositif de commande de mise en vidéoconférence est configuré par ailleurs pour envoyer des données audio de la partie distante depuis le dispositif de communication portable sans fil vers un haut-parleur externe (62) qui est externe au dispositif de communication portable sans fil.

8. Dispositif de communication portable sans fil selon la revendication 6, dans lequel le second écran d'affichage (160) comprend par ailleurs un haut-parleur (62), et dans lequel le dispositif de commande de mise en vidéoconférence est configuré par ailleurs pour envoyer des données audio de la partie distante depuis le dispositif de communication portable sans fil vers le haut parleur.

9. Dispositif de communication portable sans fil selon la revendication 6, dans lequel le dispositif de commande de mise en vidéoconférence est configuré par ailleurs pour étalonner l'image de la partie distante de façon à obtenir une conformité avec une résolution du second écran d'affichage.

10. Produit programme d'ordinateur de mise en vidéoconférence comprenant un support de stockage (26) lisible par un ordinateur comprenant un code de programme lisible par un ordinateur mis en oeuvre dans le support de stockage, le code de programme lisible par un ordinateur comprenant :
un code de programme lisible par un ordinateur qui est configuré pour mettre en vidéoconférence un utilisateur d'un dispositif de communication portable sans fil (100) avec une partie distante en utilisant le dispositif de communication portable sans fil, dans lequel le dispositif de communication portable sans fil comprend également un écran d'affichage (110) et une caméra (120) ; et
un code de programme lisible par un ordinateur qui est configuré pour afficher une image qui est générée par la caméra sur l'écran d'affichage du dispositif de communication portable sans fil tout en envoyant dans le même temps une image de la partie distante vers un écran d'affichage externe (160), pendant la vidéoconférence.

11. Produit programme d'ordinateur selon la revendication 10, dans lequel le code de programme lisible par un ordinateur qui est configuré pour établir une mise en vidéoconférence comprend par ailleurs un code de programme lisible par un ordinateur qui est configuré pour envoyer des données audio de la partie distante depuis le dispositif de communication portable sans fil vers un haut-parleur externe (62).

12. Produit programme d'ordinateur selon la revendication 10, dans lequel le code de programme lisible par un ordinateur qui est configuré pour établir une mise en vidéoconférence comprend par ailleurs un code de programme lisible par un ordinateur qui est configuré pour envoyer des données audio de la partie distante depuis le dispositif de communication portable sans fil vers un haut-parleur externe (62) de l'écran d'affichage externe (160).

13. Produit programme d'ordinateur selon la revendication 10, comprenant par ailleurs :
un code de programme lisible par un ordinateur qui est configuré pour étalonner l'image de la partie distante de façon à obtenir une conformité avec une résolution de l'écran d'affichage externe.
